# EUROPEAN PATENT SPECIFICATION

(11) **EP 4 581 352 B1**
(45) Date of publication and mention of the grant of the patent: **13.05.2026**
(21) Application number: 23765323.3
(22) Date of filing: 31.08.2023
(51) Int. Cl.: G01N 21/88, G01N 21/90, G01N 21/84

(54) **APPARATUS AND METHOD FOR INSPECTING A SLIT ON A CAP**
VORRICHTUNG UND VERFAHREN ZUR INSPEKTION EINES SCHLITZES AUF EINER KAPPE
APPAREIL ET PROCÉDÉ D'INSPECTION D'UNE FENTE DANS UN CAPUCHON

(30) Priority: 01.09.2022 IT 202200017961
(43) Date of publication of application: 09.07.2025
(73) Proprietor: SACMI COOPERATIVA MECCANICI IMOLA SOCIETA' COOPERATIVA, 40026 Imola (IT)
(72) Inventor: BALDUCCI, Massimo, 40026 Imola (Bologna) (IT)
(74) Representative: Conti, Marco
(86) International application number: PCT/IB2023/058620
(87) International publication number: WO 2024/047576

(56) References cited:
- WO-A1-2017/196193
- JP-A- 2001 050 898
- JP-A- 2017 120 201
- JP-A- H09 169 392

## Description

### Technical field

This invention relates to an apparatus and a method for inspecting a slit on a cap.

### Background art

This invention addresses the technical field of the inspection of caps, specifically the inspection of slits (or recesses) on the caps. Typically, caps comprise a body and a tamper evident ring and the body is connected to the tamper evident ring by a connecting tear strip; more specifically, when a user twists the cap for the first time, the body is separated from the tamper evident ring and the tamper evident ring remains attached to the neck of the container. In other types of caps such as, for example, those known as "tethered caps", a permanent connecting zone of the tear strip does not tear and keeps the cap body attached to the tamper evident ring; thus, tethered caps are thus prevented from being lost and help reduce littering.

In both traditional caps and tethered caps, the connecting strip may include a series of slits and bridges, that is to say, tearable connecting zones between the body and the tamper evident ring; alternatively, especially in the case of tethered caps, the connecting strip may include recesses, that is, narrow thickness portions which are thinner than the body and the tamper evident ring and which tear when the cap is twisted for the first time. These slits or the narrow thickness zones may be made during a step of moulding the cap (by compression, injection or both injection and compression), for example, inside the mould itself or by using movable drawers in the mould, or during a step subsequent to moulding, for example by slitting the cap using specific knives or by a material-removal process.

In this field, therefore, it is important that the slits, or the recesses, be of high quality, in order to facilitate opening by the user or to prevent unwanted tearing of the connecting zone.

There is therefore an ever-growing need to accurately inspect the slits or recesses before the caps are applied on the respective containers. Slitting forms an incision or a series of incisions. It is noted that this invention can be applied to the inspection of slits (or incisions) and/or recesses.

Known in the prior art are technical solutions, for example, described in patent application publication document IT202000012214A1 in the name of the present Applicant, where a light source illuminates a portion of the lateral surface, and a camera next to the cap captures image data of the illuminated portion; more specifically, the cap rotates about its own axis of symmetry so as to expose different parts of its lateral surface to the camera to allow the camera to capture an image of each portion. Incorporating a solution of this kind into a cap production line reduces production speed because every cap, in order to be inspected, must be transported into the inspection apparatus and rotated to capture images of the entire surface of the cap. Other known solutions for inspecting plastic objects are described in patent application publication documents JP2017120201A, HP-H-09169392A, JP2001050898A and WO2017/196193A. JP2017120201A discloses lamps that are arranged around the cap to be inspected; HP-H-09169392A discloses a laser beam which illuminates the inside of the cap. However, a need remains for an inspection apparatus which is particularly precise and robust.

### Disclosure of the invention

The aim of this disclosure is to provide an apparatus and a method for inspecting a slit on a cap to overcome the above mentioned disadvantages of the prior art.

In particular, this disclosure has for an aim to provide an apparatus and a method for inspecting a slit on a cap and which can be easily implemented in a production line. Another aim of this disclosure is to propose an apparatus and a method for inspecting a slit and which allows obtaining an image of the lateral surface where the slits are clearly visible and creating an image with good contrast.

A further aim of this disclosure is to provide an apparatus and a method for inspecting a slit and which ensures that the images obtained are realistic and natural.

These aims are fully achieved by the apparatus and method of this disclosure as characterized in the appended claims.

More specifically, the apparatus comprises an illuminator, configured to illuminate the cap. Preferably, the illuminator is configured to illuminate a lateral surface of the cap. More specifically, the lateral surface extends around a longitudinal axis, that is to say, like a ring around the longitudinal axis. The cap also comprises a transverse surface, that is to say, a surface connected to the lateral surface and oriented perpendicularly to the longitudinal axis. The illuminator may be configured to illuminate the transverse surface of the cap.

The apparatus comprises a conveyor, configured to transport the cap along a path. The path may be partly circular and/or partly rectilinear. The path may comprise at least one substantially rectilinear portion in proximity to the illuminator. The illuminator is configured to illuminate the lateral surface of the cap when the cap is placed at an inspection position. At the inspection position, the cap is substantially aligned with an inspection axis, where the inspection axis is oriented vertically and transversely to the path. In other words, at the inspection position, the longitudinal axis of the cap is substantially aligned with the inspection axis. The cap is placed at the inspection position so it can be inspected.

The apparatus comprises a plurality of optical sensors or a plurality of cameras. The plurality of cameras surrounds the inspection axis. The plurality of cameras is configured to capture image data, where the image data represent a plurality of images of the lateral surface of the cap at the inspection position. In other words, each of the plurality of cameras is configured to capture image data, where the image data represent an image of a corresponding portion of the lateral surface of the cap. Thus, the plurality of cameras surrounds the inspection axis and each camera frames a portion of lateral surface so the plurality frames the entire lateral surface of the cap when the cap is aligned with the inspection axis. It is noted that the inspection axis defines an inspection zone, that is to say, a zone in which the cap can be positioned for inspection. The inspection zone preferably extends around the inspection axis so that even when the cap is not perfectly aligned with the inspection axis, the cameras are nevertheless able to frame the lateral surface of the cap.

The apparatus comprises a control unit, configured to receive and process the image data. More specifically, the control unit is configured to process the image data to derive information relating to the slit on the cap.

In an embodiment, the illuminator includes a side wall, extending around the inspection axis. The side wall has a substantially cylindrical shape extending around the inspection axis. In other embodiments, the side wall may have the shape of a parallelepiped or any other geometrical shape extending around the inspection axis. More specifically, the side wall extends around the inspection axis to illuminate all of the lateral surface of the cap, with rays converging towards the inspection axis.

Preferably, the side wall delimits an internal space. The side wall may include an inlet opening to allow for passage of the cap into the internal space. The side wall may include an outlet opening to allow for passage of the cap out of the internal space. In particular, the internal space comprises the inspection axis, that is, the inspection zone. Thus, the conveyor is configured to transport the cap along the path, where the path includes passage of the cap through the inlet of the side wall, passage through the inspection axis (that is, the inspection zone) and passage through the outlet of the side wall after the cap has been inspected. In other words, the conveyor is configured to allow for passage of the cap from the inlet to the outlet of the side wall of the illuminator, passing by way of the inspection axis.

The apparatus therefore allows illuminating the entire lateral surface of the cap and capturing the image data during the passage of the cap into the inspection zone.

In an example embodiment, the apparatus comprises a collimator, configured to collimate (that is, to direct) the light emitted by the illuminator. Preferably, the collimator is configured to collimate the light towards the inspection axis. The collimator may be interposed between the illuminator (or rather, the side wall of the illuminator) and the inspection axis.

In an example, the collimator comprises a collimating grid. The collimator (that is, the collimating grid) may extend (at least partly) around the inspection axis. The collimator (that is, the collimating grid) may extend (at least partly) along the side wall of the illuminator. Alternatively, the collimator (that is, the collimating grid) may be spaced from the side wall of the illuminator.

Preferably, the collimator (that is, the collimating grid) describes a cylindrical shape around the inspection axis so that the rays are directed radially, perpendicularly to the inspection axis.

It is noted that the illuminator is configured to illuminate the lateral surface of the cap with light emitted towards the inspection axis; thus, the rays emitted by the illuminator are diffused in the internal space in all directions, that is to say, the rays are not directed.

The presence of the collimator allows collimating the rays emitted, which, after being emitted by the illuminator, adopt a direction collimated towards the inspection axis, thanks to the collimator. More specifically, in the case where the side wall of the illuminator has a cylindrical shape and the collimator (or the collimating grid) extends around the inspection axis along the side wall of the illuminator, it, too, is cylindrical (that is, it describes a cylindrical shape) and, therefore, the rays emitted are collimated radially towards the inspection axis. The collimated rays have the advantage of enhancing the definition and contrast of the image data. In effect, thanks to the collimated rays, the slits (or recesses) that appear in the image are well defined and effectively contrasted against the rest of the cap.

Preferably, the collimating grid comprises a first and a second collimating filter. In other words, the collimator comprises a first and a second collimating filter to define a collimating grid, where the first and the second collimating filter are oriented relative to each other by a predetermined angle; preferably, the first and the second collimating filter are oriented at 90° with respect to each other.

In an embodiment, the side wall of the illuminator comprises a diffuser, configured to diffuse the light in the internal space of the illuminator. The illuminator comprises a primary light source. The diffuser body (that is, the side wall of the illuminator) may have an annular configuration. The primary light source may be disposed along an upper edge of the diffuser body (that is, along an annular upper edge of the diffuser body), so that the diffuser body diffuses the light from the primary light source in the internal space.

In an example, the diffuser body is made of a plastic material, preferably methacrylate.

The function of the diffuser body, therefore, is to diffuse the light from the primary light source uniformly all the way along the side wall of the illuminator towards the internal space. For this purpose, the diffuser body extends along the side wall of the illuminator body.

In an example embodiment, the illuminator comprises a reflective layer, configured to reflect the light. Preferably, the reflective layer is applied on an outside surface of the diffuser body, facing towards the internal space to reflect the rays directed away from the inspection axis. The reflective layer may be made from a reflective material, that is to say, it may comprise a reflective film. Alternatively, the reflective layer may comprise micro slits, configured to reflect the light, that is, the rays. The purpose of the reflective layer is to increase the amount of light present in the internal space.

When the collimator, the diffuser body and the reflective layer are present, the diffuser body is interposed between the collimator and the reflective layer. For example, the reflective layer may extend around the inspection axis along the side wall of the illuminator. The illuminator may comprise an opaque layer, that is, a layer configured to absorb, or screen, the light from an environment outside the illuminator and directed towards the internal space of the illuminator and/or to absorb the light from the internal space and directed towards an environment outside the illuminator. Preferably, the reflective layer is interposed between the opaque layer and the diffuser body so as to reflect the rays towards the internal space of the illuminator. In an embodiment, the apparatus comprises a top wall, coupled to the side wall of the illuminator to delimit the top of the internal space. In an example, the apparatus comprises an additional light source. Preferably, the additional light source is coupled to the top wall to emit light in the internal space from above. The collimator may be configured to collimate the rays emitted by the additional light source towards the inspection axis. In an example, each of the plurality of images represents a respective portion of the lateral surface, captured by a corresponding camera of the plurality of cameras. Preferably, the control unit is programmed to derive a developed image from each of the plurality of images, where the developed image shows the lateral surface of the cap represented in a plane. This allows the operator to better view the entire lateral surface and the slit.

In an embodiment, the side wall comprises a plurality of openings. Each camera defines a capture axis and, preferably, the capture axis of each camera is inclined relative to a plane perpendicular to the inspection axis. In an example, each camera is located at an opening of the plurality of openings. Thus, the capture axis passes through the opening, is directed towards the inspection zone and is inclined with respect to a plane perpendicular to the inspection axis. In an embodiment, the capture axis is inclined at a variable angle, that is to say, the inclination of the capture axis relative to the plane perpendicular to the inspection axis is variable. The inclination may be varied as a function of the length of the lateral surface of the cap along the longitudinal axis.

In other words, the capture axis of the cameras is inclined relative to a direction that is perpendicular to the inspection axis. This allows preventing the openings and/or the inlet opening and/or the outlet opening from being mirrored onto the lateral surface of the cap and thus from being captured, that is, imaged, by the cameras.

In an example embodiment, the apparatus comprises a screening element. The screening element is located inside the internal space. The screening element may lie in a plane transverse to the inspection axis. The screening element may be aligned with the inspection axis, so the cap placed at the inspection position is vertically interposed between the conveyor and the screening element. Preferably, the screening element is movable vertically relative to the conveyor, to allow adjusting a distance between the screening element and the cap placed at the inspection position.

In an example, the apparatus comprises a supporting cylinder. The supporting cylinder may be inserted in a housing in the top wall. Preferably, the supporting cylinder extends between a first end and a second end, opposite to the first end. The first end may be slidably connected to the top wall. Preferably, the supporting cylinder is aligned with the inspection axis. Preferably, the screening element is connected to the second end. Thus, the supporting cylinder is configured to slide relative to the top wall along the inspection axis so as to vary a distance between the screening element and the cap placed at the inspection position.

The screening element is configured to (at least partly) screen the light, that is to say, to (at least partly) absorb the light. The screening element allows screening or limiting the light which, by being reflected against parts of the apparatus, creates false reflections on the lateral surface of the cap which can be captured by the cameras.

In an embodiment, the apparatus comprises an upper camera, located above the conveyor and defining a capture axis oriented along the inspection axis to view the cap at the inspection position from above. The upper camera may be located in the top surface. For example, the top surface may comprise a supporting member for the camera, configured to support the upper camera. In another example, the screening element, or the supporting cylinder, may comprise a housing to accommodate the upper camera or a supporting member to support it. The screening element (or the supporting cylinder) may comprise a compartment, configured to accommodate the upper camera and the screening element may comprise an opening through which the capture axis of the upper camera passes to view the cap from above. In another example, the apparatus comprises an external supporting member, located outside the internal space of the illuminator. The external supporting member may be configured to support the upper camera and/or to support the plurality of cameras. The top surface or the supporting cylinder or the screening element may comprise an opening and the upper camera may be located at the opening. The upper camera may be configured to capture image data representing an image of the transverse surface of the cap in the inspection zone.

The control unit may be configured to process the image data to derive information relating to the transverse surface of the cap and/or relating to a placement of the cap on the conveyor.

In an example embodiment, the upper camera is configured to capture a control image representing a placement of the cap on the conveyor. The control unit may be connected to the upper camera to receive the control image. The control unit may be programmed to compare the control image with reference information representing a predetermined position where the cap is aligned with the inspection axis. The control unit may be configured to process the image data to derive the information relating to the slit based on the comparison.

In an embodiment, the apparatus for inspecting a slit on a cap may form part of a cap production system. The system may comprise a feeding device, configured to feed a succession of caps to be inspected to the conveyor. The feeding device may be configured to receive a succession of caps as they leave a cap moulding apparatus.

The control unit may be configured to generate a correction signal based on the comparison between the control image and the reference information. The control unit may be configured to transmit the correction signal to the feeding device and, based on the correction signal, the feeding device may be configured to correct a placement of the cap on the conveyor.

In an embodiment, the apparatus comprises a position sensor, configured to capture a position signal representing a placement of the cap at a predetermined position. The predetermined position may be situated upstream of the inspection zone (or upstream of the inspection axis). The predetermined position may be situated along the path. The control unit may be configured to receive the position signal and to instruct the cameras to capture the image data in synchronized manner based on the position signal. The control unit may be configured to calculate a travel time it takes the cap to travel from the predetermined position to the inspection zone and to instruct the cameras to capture the image data based on the travel time.

This disclosure also provides a method for inspecting a slit made on a lateral surface of a plastic cap.

The method comprises a step of transporting the plastic cap on a conveyor along a path, where the conveyor may be made according to one or more aspects of this disclosure.

The method comprises a step of illuminating the lateral surface of the cap with an illuminator, preferably when the cap is placed at the inspection position or in proximity to the inspection axis. The inspection axis is oriented vertically and transversely to the path. More specifically, the illuminator may be made according to one or more aspects of this disclosure.

The method comprises capturing image data by means of a plurality of cameras, preferably when the cap is at the inspection position, the image data representing a plurality of images of the lateral surface of the cap. The cameras of the plurality of cameras may be made according to one or more aspects of this disclosure. Preferably, the plurality of cameras surrounds the inspection axis.

The method comprises a step of receiving image data, performed by a control unit made according to one or more aspects of this disclosure. The control unit processes the image data to derive information relating to the slit.

In an embodiment, the illuminator includes a side wall around the inspection axis to illuminate all of the lateral surface of the cap at the same time with rays converging towards the inspection axis, the side wall delimiting an internal space and including an inlet opening and an outlet opening to allow for passage of the cap into and out of the internal space, respectively. Thus, the method may comprise a step, performed by the illuminator, of illuminating all of the lateral surface at the same time. In an example, the method comprises a step, performed by the conveyor, of transporting the cap from the inlet to the outlet of the internal space by way of the inspection axis.

In an example embodiment, the method comprises a step of collimating the light emitted by the illuminator. The step of collimating may be performed by a collimator or by a collimating grid. The collimator or the collimating grid may be made according to one or more aspects of this disclosure. Preferably, the light emitted is collimated towards the inspection axis. The collimating grid may be interposed between the illuminator and the inspection axis to collimate the light emitted by the illuminator towards the inspection axis, and may extend around the inspection axis along the side wall of the illuminator to describe a cylindrical shape around the inspection axis so that the rays are directed radially, perpendicularly to the inspection axis. Thus, the method may include a step of directing the rays along radial directions, perpendicularly to the inspection axis.

In an embodiment, the side wall of the illuminator includes a diffuser body having a ring-shaped configuration, and the illuminator comprises a primary light source disposed along an upper edge of the diffuser body. The method may comprise a step of emitting light, performed by the primary light source. The method may include a step, performed by the diffuser body, of diffusing the light from the primary light source in the internal space.

In an example, the illuminator comprises a reflective layer, preferably facing towards the internal space, and the method comprises a step, performed by the reflective layer, of reflecting the rays directed away from the inspection axis.

The side wall may comprise an opaque layer and the method may comprise a step of screening the light from an environment outside the illuminator and directed towards the internal space of the illuminator and/or the light from the internal space and directed towards an environment outside the illuminator.

In an example, the method comprises a step, performed by an additional illuminator, preferably coupled to a top wall, of illuminating from above, where the top wall is coupled to the side wall of the illuminator to delimit the top of the internal space.

In an embodiment, each of the plurality of images represents a respective portion of the lateral surface and the method comprises a step, performed by the control unit, of deriving a developed image from each of the plurality of images, where the developed image shows the lateral surface of the cap represented in a plane.

In an example, each camera defines a capture axis, the capture axis being inclined relative to a plane perpendicular to the inspection axis, and the method comprises a step, performed by each camera, of capturing the lateral surface of the cap through an opening made in the side wall of the illuminator. The method may comprise a step of varying the inclination of the capture axis.

For example, the method may comprise a step of screening the light, performed by a screening element made according to one or more aspects of this disclosure.

In an example, the method comprises a step of viewing the cap in the inspection zone from above, performed by an upper camera, located above the conveyor and defining a capture axis oriented along the inspection axis and aligned with the inspection axis.

The method may comprise a step, performed by the upper camera, of capturing a control image representing a placement of the cap on the conveyor when the cap is at the inspection position.

The method may comprise a step, performed by the control unit, of receiving the control image and comparing the control image with reference information representing a predetermined position where the cap is aligned with the inspection axis. The method may comprise a step, performed by the control unit, of processing and generating information relating to the slit, based on the comparison.

In an embodiment, the method comprises a step, performed by a feeding device, of feeding a succession of caps to be inspected to the conveyor. The method may comprise a step, performed by the control unit, of generating and transmitting a correction signal based on the comparison between the control image and the reference information.

The method may comprise a step, performed by the control unit, of transmitting the correction signal to the feeding device, and a step, performed by the feeding device, of placing the cap on the conveyor, based on the correction signal.

In an example, the method comprises a step, performed by a position sensor, of capturing a position signal representing a placement of the cap at a predetermined position. The method may comprise a step, performed by the control unit, of receiving the position signal and instructing the cameras to capture the image data in a synchronized manner based on the position signal. The method may include a step, performed by the control unit, of calculating a travel time it takes the cap to travel along the path from the predetermined position to the inspection zone and instructing the cameras to capture the image data based on the travel time.

The present disclosure also regards a line for producing plastic caps. The line comprises a forming machine, for manufacturing the plastic caps in continuous cycle. The forming machine includes a plurality of molds. The forming machine may be either of the batch typology or of the rotary typology. The molds may be either compression molds or injection molds, the forming machine being configured for manufacturing the caps by compression molding or injection molding, respectively. The line may comprise also a slitting device, provided with cutters (such as knives or laser generators) and configured for receiving the caps for the forming machine and for applying slits to the caps through the cutters. The line also comprises an apparatus for inspecting a slit made on a lateral surface of the cap, the apparatus having one or more of the features included in the present disclosure. If the slitting device is present, the inspection apparatus is arranged downstream of the slitting device.

Likewise, the present disclosure also regards a method for producing plastic caps in continuous cycle. The method comprises a step of molding the caps though a forming machine (either rotary or batch, either by compression or injection molding). Moreover, the method may comprise a step of processing the caps though a slitting device for applying slits on a lateral surface of the plastic cap. The method also comprises inspecting the slit made on a lateral surface of a plastic cap, though the method according to one or more of the features included in the present disclosure. If the processing step is present, the inspection is carried out after the processing step. It is observed that the processing step, in some example embodiments, is not present, because the slits could be provided on the lateral surface of a plastic cap already at the time of molding the cap; in other words, in some example embodiments, the caps are molded with the slits; conversely, in other example embodiments the caps are molded without the slits and the slits are applied later (after the formation of the caps) through the slitting device.

### Brief description of drawings

This and other features of the invention will become more apparent from the following description of a preferred embodiment of it, illustrated purely by way of example in the accompanying drawings, in which:

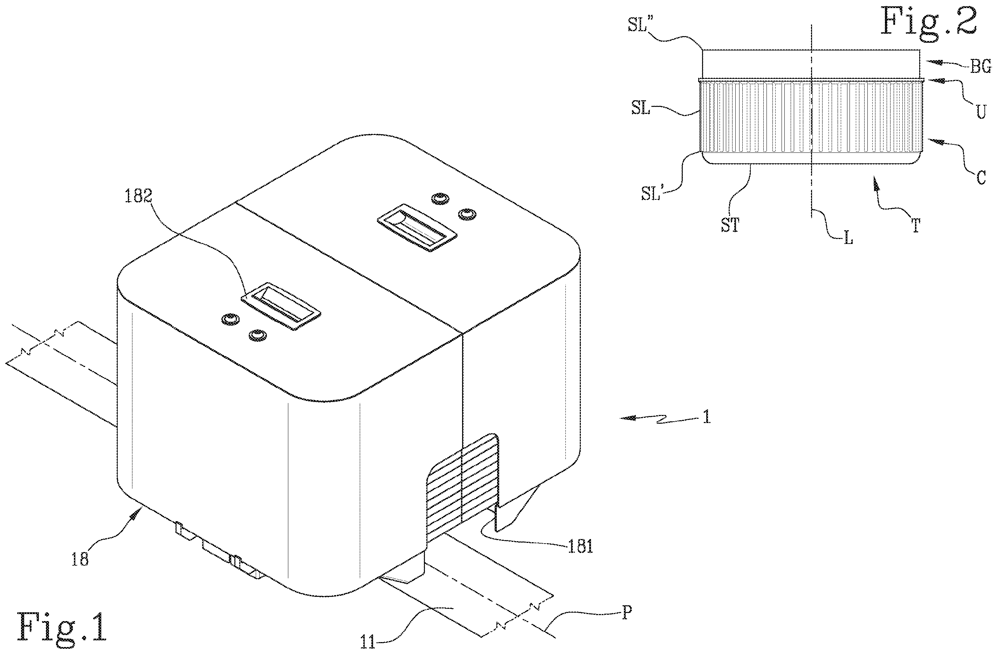

- Figure 1 shows an apparatus according to one or more aspects of this disclosure;
- Figure 2 shows a cap according to one or more aspects of this disclosure;

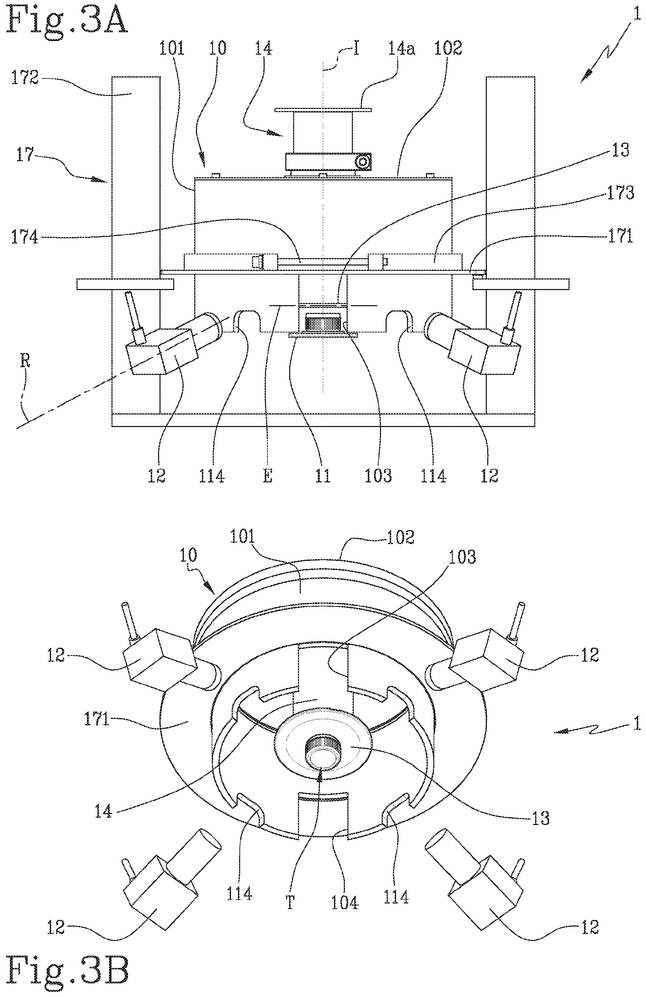

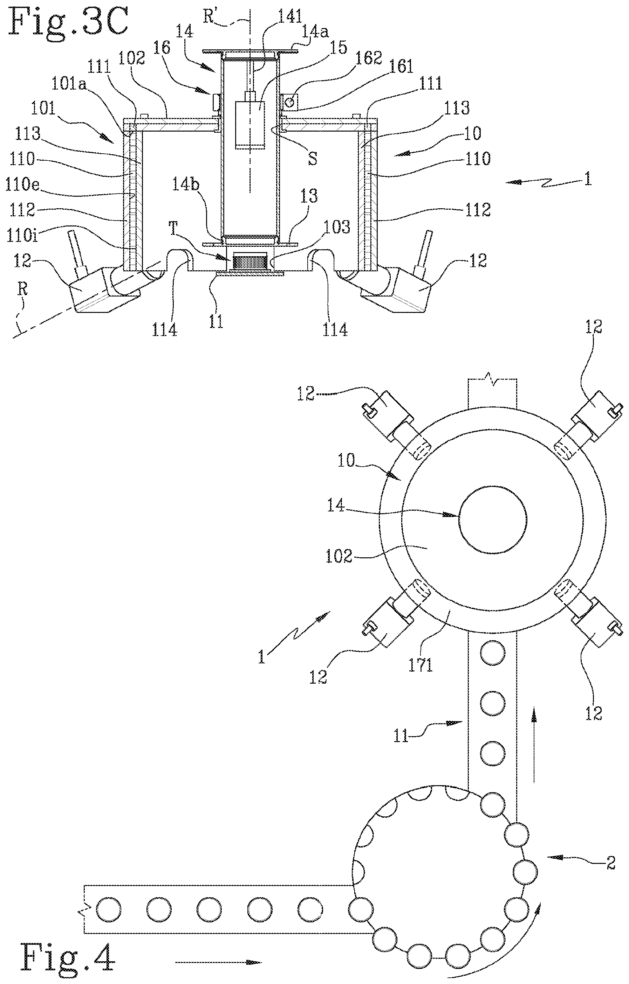

- Figures 3A, 3B show an apparatus and Figure 3C a cross section of an apparatus according to one or more aspects of this disclosure;
- Figure 4 shows a portion of a system comprising an apparatus according to one or more aspects of this disclosure.

### Detailed description of preferred embodiments of the invention

With reference to the accompanying drawings, the numeral 1 denotes an apparatus for inspecting a slit made on a cap T, for example, a plastic cap, preferably on a lateral surface SL of the cap T. The lateral surface SL of the cap T extends around a longitudinal axis L between a first end SL' and a second end SL"; the cap T also comprises a transverse surface ST, connected to the lateral surface SL (for example, connected to the first end SL' of the lateral surface SL) and oriented perpendicularly to the longitudinal axis L. The lateral surface SL of the cap T comprises a joining zone U comprising the slit and/or one or a plurality of narrow thickness zones. The joining zone U defines a body C and a tamper evident strip BG of the cap T. The slit is intermittent so that the body C is connected to the tamper evident strip BG by links, that is to say, zones of the cap that do not comprise slits (or narrow thickness zones).

The links may be temporary, that is, links configured to break when the user twists the cap T off the container for the first time; in this case, the body C and the tamper evident strip are permanently separated. In addition, or alternatively, the links may be permanent (in which case, they may also be known as "tethers"), that is to say, links configured to allow the body C to be moved away from the tamper evident strip: in this case, the body C and the tamper evident strip BG remain attached to each other by the permanent links.

The apparatus 1 comprises a conveyor 11 for transporting the cap T along a path P, including a substantially rectilinear portion. In an embodiment, the conveyor 11 is a belt. The conveyor 11 is configured to hold the cap T in place (that is, supportably receive it) while it is being transported along the path P. Preferably, the conveyor 11 is configured to hold the cap T on the conveyor 11 by suction. The cap T may be placed on the conveyor 11 with its transverse surface ST in contact with the conveyor 11, or with the second end SL" of the lateral surface SL in contact with the conveyor 11.

In an embodiment, the conveyor 11 comprises a feed portion, configured to receive from a feeding device 2 an ordered succession of caps T to be inspected, where the feeding device 2 is part of a system for the production of caps T. In an embodiment, the conveyor 11 comprises an outfeed portion configured to deliver the succession of inspected caps T to an outfeed device, where the outfeed device is part of a system for the production of caps T.

The apparatus 1 comprises an illuminator 10, configured to illuminate the cap T, where the cap T is placed at an inspection position. At the inspection position, the longitudinal axis L of the cap T is substantially aligned with (or is in proximity to) an inspection axis I. The inspection axis I is perpendicular to the path P of the conveyor 11, specifically to the rectilinear portion of the path P. The illuminator 10 comprises a side wall 101 extending around the inspection axis I, the side wall 101 preferably having a cylindrical shape and delimiting an internal space. The illuminator 10 comprises a top wall 102, coupled to the side wall 101 to delimit the top of the internal space. The illuminator 10 comprises an inlet opening 103, made in the side wall 101, to allow for passage of the cap T into the internal space, and an outlet opening 104, to allow for passage of the cap T out of the internal space. More specifically, the conveyor 11 is configured to transport the cap T between the inlet opening 103 and the outlet opening 104 by way of the inspection axis I. It is noted that the inspection axis I is located in the internal space of the illuminator 10. The inspection axis I defines an inspection zone, that is to say, a zone in the illuminator 10 in proximity to the inspection axis I, where the cap T is placed for inspection.

The side wall 101 of the illuminator 10 comprises a diffuser body 110, configured to diffuse the light inside the internal space of the illuminator 10. The illuminator 10 comprises a primary light source 111. The diffuser body 110 has a ring-shaped configuration and extends along the side wall 101 of the illuminator 10. The primary light source 111 is located along an upper edge 110b of the diffuser body 110 so that the diffuser body 110 diffuses the light from the primary light source 111 in the internal space. The diffuser body 110 is preferably made from methacrylate material.

The illuminator 10 comprises a reflective layer 112, preferably a reflective film or a layer comprising micro slits, configured to reflect the light. The reflective layer 112 is located on an outside surface 110e of the diffuser body 110, where the outside surface 110e of the diffuser body 110 is opposite to an inside surface 110i facing towards the internal space of the illuminator 10. The reflective surface 112 faces towards the internal space to reflect the light rays directed towards the reflective layer 112. The reflective layer 112 extends along the side wall 101 of the illuminator 10.

The illuminator 10 comprises a collimator 113, configured to collimate the light emitted towards the inspection axis I. The collimator 113 comprises a first and a second collimating filter, oriented at 90° to each other to define a collimating grid. The collimator 113 is interposed between the inspection axis I and the diffuser body 110 of the illuminator 10 and extends around the inspection axis I. The collimator 113 is preferably located on the inside surface 110i of the diffuser body 110 so that the rays diffused by the diffuser body 110 are collimated perpendicularly to the inspection axis I.

The side wall 101 of the illuminator 10 comprises a plurality of openings 114 surrounding the inspection axis I. The apparatus 1 comprises a plurality of cameras 12, configured to capture image data, where the image data represent a plurality of images of the lateral surface SL of the cap T at the inspection position. Each camera 12 defines a capture axis R that is inclined relative to a plane perpendicular to the inspection axis I. Each camera 12 is located at an opening 114 of the plurality of openings 114 of the side wall 101 in order to frame the lateral surface SL of the cap T.

The apparatus 1 comprises a control unit, configured to receive and process the image data to derive information relating to the slit on the cap T. More specifically, each of the plurality of images represents a respective portion of the lateral surface SL, captured by a corresponding camera 12 of the plurality of cameras 12.

Each of the plurality of images represents a respective portion of the lateral surface SL and the control unit is programmed to derive a developed image from each of the plurality of images, where the developed image shows the lateral surface SL of the cap T represented in a plane.

The apparatus 1 comprises a screening element 13, located in the internal space, extending in a plane E transverse to the inspection axis I and aligned with the inspection axis I so that the cap T, at the inspection position, is interposed between the conveyor 11 and the screening element 13. The apparatus 1 comprises a supporting cylinder 14, inserted in a housing S of the top wall 102 and extending between a first end 14a and a second end 14b. The first end 14a of the supporting cylinder 14 is inserted in the housing S of the top wall so that the supporting cylinder 14 can slide and the second end 14b is connected to the screening element 13. The supporting cylinder 14 is aligned with the inspection axis I and slides along the inspection axis I to vary a distance between the screening element 13 and the cap T.

In an example embodiment, the apparatus 1 may comprise an upper camera 15, defining a capture axis R' oriented along the inspection axis I. The supporting cylinder 14 may comprise an opening (for example, made in the screening element 13) and the upper camera 15 may be located at that opening. The upper camera 15 may be supported by a supporting member 141 of the supporting cylinder 14. The upper camera 15 captures image data representing an image of the transverse surface ST of the cap T and the control unit processes the image data to derive information relating to the transverse surface ST of the cap T and/or of the position of the cap T on the conveyor 11. The apparatus 1 may comprise a locking element 16, configured to lock the supporting cylinder 14 in place along the inspection axis I. The locking element 15 may include a clamp 161 and a stop screw 162.

The apparatus 1 comprises a mounting assembly 17, configured to support the illuminator 10. The mounting assembly 17 comprises a mounting flange 171 connected outside (relative to the internal space of the illuminator 10) to the side wall 101 of the illuminator 10. The mounting assembly 17 (specifically the mounting flange 171) is configured to support the plurality of cameras 12 surrounding the inspection axis I. The illuminator 10 is configured to slide along the inspection axis I, relative to the mounting flange 171, so as to adjust its height relative to the plurality of cameras 12. The mounting flange 171 is also connected to a mounting wall 172 of the mounting assembly, surrounding the inspection axis I and located on the outside of the illuminator 10. The mounting assembly 17 comprises a locking element, including a mounting clamp 173 and a mounting screw 174 to fix the illuminator 10 in position along the inspection axis I relative to the mounting assembly 17.

In an embodiment, the apparatus 1 comprises a box 18, configured to screen the illuminator 10 from the light coming from outside the illuminator 10. The box 18 comprises an entrance 181 and an exit for the conveyor 11, located at the inlet opening 103 and the outlet opening 104 of the side wall 101 of the illuminator 10, respectively. The box 8 comprises a pair of handgrips 182.

Operatively, in a step of inspecting a slit on the lateral surface SL of the cap T, the conveyor 11 transports the cap T to be inspected along the path P. The conveyor 11 may receive an ordered succession of caps T from a feeding device 2. The conveyor 11 transports the cap T to be inspected towards the inlet opening 103 made in the side wall 101 of the illuminator 10. The side wall 101 defines the internal space in which the lateral surface SL of the cap T is illuminated. More specifically, the conveyor 11 transports the cap towards the inspection axis I, around which the side wall 101 of the illuminator 10 extends, so that the longitudinal axis L of the cap T is substantially aligned with the inspection axis I. The primary light source 111 illuminates the lateral surface SL of the cap T when the cap is inside the internal space. The light from the primary light source 111 is first diffused by the diffuser body 110 extending along the side wall 101 of the illuminator 10 and surrounding the inspection axis I. Thus, the light is diffused inside the internal space. The light is also reflected by the reflective layer 112, extending along the side wall 101, surrounding the inspection axis I and located on the outside surface 110e of the diffuser body 110. The light emitted, that is to say, both the light reflected by the reflective layer 112 and the light diffused by the diffuser body 110 is collimated by a collimating grid of the collimator 113. Thus, inside the internal space, the rays are directed radially towards the inspection axis I, towards the lateral surface SL of the cap T. The screening element 13, located along the inspection axis I and extending transversely to the inspection axis I, screens some of the rays. When the cap T is at the inspection position, a plurality of cameras 12 surrounding the inspection axis I captures image data representing a plurality of images of the lateral surface SL.

In an embodiment, a position sensor captures a position signal representing a placement of the cap T at a predetermined position, upstream of the inspection axis I. A control unit receives the position signal and calculates a travel time it takes the cap T to travel from the predetermined position to the inspection zone, based on the speed of the conveyor 11, and instructs the cameras 12 to capture the image data based on the travel time. Each camera 12 captures image data representing a portion of the lateral surface of the cap and sends the data to the control unit. The control unit receives and processes the image data to derive information relating to the slit on the cap. More specifically, the control unit derives a developed image from each of the plurality of images, where the developed image shows the lateral surface SL of the cap T represented in a plane.

Next, the cap T thus inspected is transported by the conveyor 11 towards the outlet opening 104. After that, the cap T may be delivered to a rejection device.

## Claims

1. An apparatus (1) for inspecting a slit made on a lateral surface (SL) of a plastic cap (T), comprising:
- a conveyor (11), configured to transport the cap (T) along a path (P);
- an illuminator (10), configured to illuminate the lateral surface (SL) of the cap (T) placed at an inspection position, wherein the cap (T), at the inspection position, is aligned with an inspection axis (I), the inspection axis (I) being oriented vertically and transversely to the path (P);
- a plurality of cameras (12) surrounding the inspection axis (I) and configured to capture image data representing a plurality of images of the lateral surface (SL) of the cap (T) at the inspection position;
- a control unit, configured to receive and process the image data to derive information relating to the slit,
**characterized in that** the illuminator (10) includes a side wall (101) extending around the inspection axis (I) to illuminate all of the lateral surface (SL) of the cap (T) with rays that converge towards the inspection axis (I), the side wall (101) delimiting an internal space and including an inlet opening (103) and an outlet opening (104) to allow for passage of the cap into and out of the internal space, respectively.

2. The apparatus (1) according to claim 1, comprising a collimator (113), interposed between the illuminator (10) and the inspection axis (I) and configured to collimate the light emitted by the illuminator (10) towards the inspection axis (I).

3. The apparatus (1) according to claim 2, wherein the collimator (113) comprises a collimating grid, extending around the inspection axis (I) along the side wall (101) of the illuminator (10) to describe a cylindrical shape around the inspection axis (I) so that the rays are directed radially, perpendicularly to the inspection axis (I).

4. The apparatus (1) according to any one of the preceding claims, wherein the side wall (101) of the illuminator (10) includes a diffuser body (110), having a ring-shaped configuration and wherein the illuminator (10) comprises:
- a primary light source (111) disposed along an upper edge (110b) of the diffuser body (110), the diffuser body (110) being configured to diffuse the light from the primary light source (111) in the internal space, and
- a reflective layer (112), applied on an outside surface (110e) of the diffuser body (110), facing towards the internal space to reflect the rays directed away from the inspection axis (I).

5. The apparatus (1) according to any one of the preceding claims, comprising a top wall (102), coupled to the side wall (101) of the illuminator (10) to delimit the top of the internal space, and an additional light source (111), coupled to the top wall (102) to emit light into the internal space from above.

6. The apparatus (1) according to any one of the preceding claims, wherein at least one of the following condition is true:
i) each of the plurality of images represents a respective portion of the lateral surface (SL), imaged by a corresponding camera (12) of the plurality of cameras (12) and the control unit is programmed to derive a developed image from each of the plurality of images, where the developed image shows the lateral surface (SL) of the cap (T) represented in a plane;
ii) the side wall (101) comprises a plurality of openings (114), each camera (12) being located at an opening (114) of the plurality of openings (114),
iii) each camera (12) defines a capture axis (R), the capture axis (R) of each camera (12) being inclined relative to a plane that is perpendicular to the inspection axis (I).

7. The apparatus (1) according to any one of the preceding claims, comprising a screening element (13), wherein the screening element (13)
is located inside the internal space and extends in a plane (E) transverse to the inspection axis (I),
is aligned with the inspection axis (I), so the cap (T) placed at the inspection position is vertically interposed between the conveyor (11) and the screening element (13),
is movable vertically relative to the conveyor (11), to allow adjusting a distance between the screening element (13) and the cap (T) placed at the inspection position.

8. The apparatus (1) according to any one of the preceding claims, comprising an upper camera (15), located above the conveyor (11) and defining a capture axis (R') oriented along the inspection axis (I) to view the cap (T) at the inspection position from above, wherein the upper camera (15) is configured to capture a control image representing a placement of the cap (T) on the conveyor (11) and wherein the control unit is connected to the upper camera (15) to receive the control image and is programmed for:
- comparing the control image with reference information representing a predetermined position where the cap (T) is aligned with the inspection axis (I);
- processing the image data to derive the information relating to the slit based on the comparison.

9. The apparatus (1) according to any one of the preceding claims, comprising a position sensor configured to capture a position signal representing a placement of the cap (T) at a predetermined position upstream of the inspection zone, wherein the control unit receives the position signal and instructs the cameras (12) to capture the image data in a synchronized manner based on the position signal.

10. A line for manufacturing plastic caps (T), comprising:
- a forming machine, for manufacturing the plastic caps in continuous cycle;
- an apparatus (1) for inspecting a slit made on a lateral surface (SL) of the plastic cap (T), the apparatus being according to any of the previous claims.

11. A method for inspecting a slit made on a lateral surface (SL) of a plastic cap (T), the method comprising the following steps:
- through a conveyor (11), transporting the plastic cap (T) along a path (P);
- through an illuminator (10), illuminating the lateral surface (SL) of the cap (T) when the cap (T) is placed at an inspection position where it is aligned with an inspection axis (I), the inspection axis (I) being oriented vertically and transversely to the path (P);
- capturing image data, by means of a plurality of cameras (12) surrounding the inspection axis (I), when the cap (T) is at the inspection position, the image data representing a plurality of images of the lateral surface (SL) of the cap (T);
- through a control unit, receiving and processing the image data to derive information relating to the slit,
the method being **characterized in that** the illuminator (10) includes a side wall (101) extending around the inspection axis (I) to illuminate all of the lateral surface (SL) of the cap (T) at the same time with rays that converge towards the inspection axis (I), the side wall (101) delimiting an internal space and including an inlet opening (103) and an outlet opening (104) to allow for passage of the cap (T) into and out of the internal space, respectively.

12. The method according to claim 11, comprising a step, performed by a collimating grid of a collimator (113), of collimating the light emitted by the illuminator (10) towards the inspection axis (I), wherein the collimating grid is interposed between the illuminator (10) and the inspection axis (I), to collimate the light emitted by the illuminator (10) towards the inspection axis (I), and extends around the inspection axis (I) along the side wall (101) of the illuminator (10) to describe a cylindrical shape around the inspection axis (I) so that the rays are directed radially, perpendicularly to the inspection axis (I) and wherein the side wall (101) of the illuminator (10) includes a diffuser body (110), having a ring-shaped configuration and wherein the illuminator (10) comprises a primary light source (111) disposed along an upper edge (110b) of the diffuser body (110), the method comprising the following steps:
- through a primary light source (111), emitting light;
- through the diffuser body (110), diffusing the light from the primary light source (111) in the internal space.

13. The method according to claim 11 to 12, wherein each camera (12) defines a capture axis (R), the capture axis (R) being inclined relative to a plane that is perpendicular to the inspection axis (I).

14. The method according to any one of claims 11 to 13, comprising the following steps:
- through an upper camera (15) located above the conveyor (11) and defining a capture axis (R') aligned with the inspection axis (I), capturing a control image representing a placement of the cap (T) on the conveyor (11) when the cap (T) is placed at the inspection position;
- through the control unit, receiving the control image and comparing the control image with reference information representing a predetermined position where the cap (T) is aligned with the inspection axis (I);
- through the control unit, processing and generating the information relating to the slit, based on the comparison.

15. A method for producing plastic caps (T) in continuous cycle, comprising the following steps:
- molding the caps though a forming machine;
- inspecting a slit made on a lateral surface (SL) of the plastic cap (T), through a method according to any of the previous claims from 11 to 14.

## Patentansprüche

1. Vorrichtung (1) zur Inspektion eines Schlitzes, der an einer seitlichen Oberfläche (SL) einer Kunststoffkappe (T) ausgebildet ist, umfassend:
- einen Förderer (11), der so ausgelegt ist, dass er die Kappe (T) entlang eines Weges (P) transportiert;
- einen Illuminator (10), der so ausgelegt ist, dass er die seitliche Oberfläche (SL) der an einer Inspektionsposition platzierten Kappe (T) beleuchtet, wobei die Kappe (T) an der Inspektionsposition mit einer Inspektionsachse (I) fluchtet, wobei die Inspektionsachse (I) vertikal und quer zum Weg (P) ausgerichtet ist;
- eine Vielzahl von Kameras (12), die die Inspektionsachse (I) umgeben und so ausgelegt sind, dass sie Bilddaten erfassen, die eine Vielzahl von Bildern der seitlichen Oberfläche (SL) der Kappe (T) an der Inspektionsposition darstellen;
- eine Steuereinheit, die so ausgelegt ist, dass sie die Bilddaten empfängt und verarbeitet, um Informationen bezüglich des Schlitzes abzuleiten,
**dadurch gekennzeichnet, dass** der Illuminator (10) eine Seitenwand (101) einschließt, die sich um die Inspektionsachse (I) herum erstreckt, um die gesamte seitliche Oberfläche (SL) der Kappe (T) mit Strahlen zu beleuchten, die zur Inspektionsachse (I) hin konvergieren, wobei die Seitenwand (101) einen Innenraum begrenzt und eine Einlassöffnung (103) sowie eine Auslassöffnung (104) einschließt, um den Durchgang der Kappe in den bzw. aus dem Innenraum zu ermöglichen.

2. Vorrichtung (1) nach Anspruch 1, umfassend einen Kollimator (113), der zwischen dem Illuminator (10) und der Inspektionsachse (I) eingefügt und so ausgelegt ist, dass er das von dem Illuminator (10) ausgestrahlte Licht in Richtung der Inspektionsachse (I) kollimiert.

3. Vorrichtung (1) nach Anspruch 2, wobei der Kollimator (113) ein Kollimationsgitter umfasst, das sich entlang der Seitenwand (101) des Illuminators (10) um die Inspektionsachse (I) erstreckt, um eine zylindrische Form um die Inspektionsachse (I) zu beschreiben, sodass die Strahlen radial, senkrecht zur Inspektionsachse (I), gerichtet sind.

4. Vorrichtung (1) nach einem der vorhergehenden Ansprüche, wobei die Seitenwand (101) des Illuminators (10) einen Verteilerkörper (110) mit ringförmiger Konfiguration einschließt und wobei der Illuminator (10) Folgendes umfasst:
- eine primäre Lichtquelle (111), die entlang einer oberen Kante (110b) des Verteilerkörpers (110) angeordnet ist, wobei der Verteilerkörper (110) so ausgelegt ist, dass er das Licht der primären Lichtquelle (111) in den Innenraum streut, und
- eine reflektierende Schicht (112), die auf einer dem Innenraum zugewandten außenseitigen Oberfläche (110e) des Verteilerkörpers (110) angebracht ist, um die von der Inspektionsachse (I) wegführenden Strahlen zu reflektieren.

5. Vorrichtung (1) nach einem der vorhergehenden Ansprüche, umfassend eine oberseitige Wand (102), die mit der Seitenwand (101) des Illuminators (10) gekoppelt ist, um die Oberseite des Innenraums zu begrenzen, sowie eine zusätzliche Lichtquelle (111), die mit der oberseitigen Wand (102) gekoppelt ist, um Licht von oben in den Innenraum auszustrahlen.

6. Vorrichtung (1) nach einem der vorhergehenden Ansprüche, wobei mindestens eine der folgenden Bedingungen erfüllt ist:
i) jedes der Vielzahl von Bildern stellt einen jeweiligen Abschnitt der seitlichen Oberfläche (SL) dar, der von einer entsprechenden Kamera (12) aus der Vielzahl von Kameras (12) abgebildet wird, und die Steuereinheit ist so programmiert, dass sie aus jedem der Vielzahl von Bildern ein entwickeltes Bild ableitet, wobei das entwickelte Bild die seitliche Oberfläche (SL) der Kappe (T) dargestellt in einer Ebene zeigt;
ii) die Seitenwand (101) umfasst eine Vielzahl von Öffnungen (114), wobei sich jede Kamera (12) an einer Öffnung (114) der Vielzahl von Öffnungen (114) befindet,
iii) jede Kamera (12) definiert eine Erfassungsachse (R), wobei die Erfassungsachse (R) jeder Kamera (12) relativ zu einer Ebene geneigt ist, die senkrecht zur Inspektionsachse (I) steht.

7. Vorrichtung (1) nach einem der vorhergehenden Ansprüche, umfassend ein Abschirmungselement (13), wobei sich das Abschirmungselement (13)
im Innenraum befindet und sich in einer Ebene (E) quer zur Inspektionsachse (I) erstreckt,
mit der Inspektionsachse (I) fluchtet, sodass die an der Inspektionsposition platzierte Kappe (T) vertikal zwischen dem Förderer (11) und dem Abschirmungselement (13) eingefügt ist,
vertikal relativ zum Förderer (11) bewegbar ist, um die Einstellung eines Abstands zwischen dem Abschirmungselement (13) und der an der Inspektionsposition platzierten Kappe (T) zu ermöglichen.

8. Vorrichtung (1) nach einem der vorhergehenden Ansprüche, umfassend eine obere Kamera (15), die sich oberhalb des Förderers (11) befindet und eine entlang der Inspektionsachse (I) ausgerichtete Erfassungsachse (R') definiert, um die Kappe (T) an der Inspektionsposition von oben zu betrachten, wobei die obere Kamera (15) so ausgelegt ist, dass sie ein Kontrollbild erfasst, das eine Positionierung der Kappe (T) auf dem Förderer (11) darstellt, und wobei die Steuereinheit mit der oberen Kamera (15) verbunden ist, um das Kontrollbild zu empfangen, und programmiert ist für:
- das Vergleichen des Kontrollbildes mit Referenzinformationen, die eine vorbestimmte Position darstellen, an der die Kappe (T) mit der Inspektionsachse (I) fluchtet;
- das Verarbeiten der Bilddaten, um auf der Grundlage des Vergleichs die Informationen bezüglich des Schlitzes abzuleiten.

9. Vorrichtung (1) nach einem der vorhergehenden Ansprüche, umfassend einen Positionssensor, der so ausgelegt ist, dass er ein Positionssignal erfasst, das eine Platzierung der Kappe (T) an einer vorbestimmten Position stromaufwärts der Inspektionszone darstellt, wobei die Steuereinheit das Positionssignal empfängt und die Kameras (12) anweist, die Bilddaten auf der Grundlage des Positionssignals synchronisiert zu erfassen.

10. Linie zur Fertigung von Kunststoffkappen (T), umfassend:
- eine Formmaschine zur Fertigung der Kunststoffkappen in einem kontinuierlichen Zyklus;
- eine Vorrichtung (1) zur Inspektion eines Schlitzes, der an einer seitlichen Oberfläche (SL) der Kunststoffkappe (T) ausgebildet ist, wobei die Vorrichtung einem der vorhergehenden Ansprüche entspricht.

11. Verfahren zur Inspektion eines Schlitzes, der an einer seitlichen Oberfläche (SL) einer Kunststoffkappe (T) ausgebildet ist, wobei das Verfahren die folgenden Schritte umfasst:
- durch einen Förderer (11), Transportieren der Kunststoffkappe (T) entlang eines Weges (P);
- durch einen Illuminator (10), Beleuchten der seitlichen Oberfläche (SL) der Kappe (T), wenn die Kappe (T) an einer Inspektionsposition platziert ist, in der sie mit einer Inspektionsachse (I) fluchtet, wobei die Inspektionsachse (I) vertikal und quer zum Weg (P) ausgerichtet ist;
- Erfassen von Bilddaten mittels einer Vielzahl von Kameras (12), die die Inspektionsachse (I) umgeben, wenn sich die Kappe (T) in der Inspektionsposition befindet, wobei die Bilddaten eine Vielzahl von Bildern der seitlichen Oberfläche (SL) der Kappe (T) darstellen;
- durch eine Steuereinheit, Empfangen und Verarbeiten der Bilddaten, um Informationen bezüglich des Schlitzes abzuleiten,
wobei das Verfahren **dadurch gekennzeichnet ist, dass** der Illuminator (10) eine Seitenwand (101) einschließt, die sich um die Inspektionsachse (I) herum erstreckt, um die gesamte seitliche Oberfläche (SL) der Kappe (T) gleichzeitig mit Strahlen zu beleuchten, die zur Inspektionsachse (I) hin konvergieren, wobei die Seitenwand (101) einen Innenraum begrenzt und eine Einlassöffnung (103) sowie eine Auslassöffnung (104) einschließt, um den Durchgang der Kappe (T) in den bzw. aus dem Innenraum zu ermöglichen.

12. Verfahren nach Anspruch 11, umfassend einen Schritt, der durch ein Kollimationsgitter eines Kollimators (113) ausgeführt wird, zum Kollimieren des vom Illuminator (10) ausgestrahlten Lichts in Richtung der Inspektionsachse (I), wobei das Kollimationsgitter zwischen dem Illuminator (10) und der Inspektionsachse (I) eingefügt ist, um das vom Illuminator (10) ausgestrahlte Licht in Richtung der Inspektionsachse (I) zu kollimieren, und sich entlang der Seitenwand (101) des Illuminators (10) um die Inspektionsachse (I) erstreckt, um eine zylindrische Form um die Inspektionsachse (I) zu beschreiben, sodass die Strahlen radial, senkrecht zur Inspektionsachse (I) gerichtet sind, und wobei die Seitenwand (101) des Illuminators (10) einen Verteilerkörper (110) mit ringförmiger Konfiguration einschließt und wobei der Illuminator (10) eine primäre Lichtquelle (111) umfasst, die entlang einer oberen Kante (110b) des Verteilerkörpers (110) angeordnet ist, wobei das Verfahren die folgenden Schritte umfasst:
- durch eine primäre Lichtquelle (111), Ausstrahlen von Licht;
- durch den Verteilerkörper (110), Streuen von Licht der primären Lichtquelle (111) in den Innenraum.

13. Verfahren nach Anspruch 11 bis 12, wobei jede Kamera (12) eine Erfassungsachse (R) definiert, wobei die Erfassungsachse (R) relativ zu einer Ebene geneigt ist, die senkrecht zur Inspektionsachse (I) steht.

14. Verfahren nach einem der Ansprüche 11 bis 13, umfassend die folgenden Schritte:
- durch eine obere Kamera (15), die sich oberhalb des Förderers (11) befindet und eine mit der Inspektionsachse (I) ausgerichtete Erfassungsachse (R') definiert, Erfassen eines Kontrollbildes, das eine Platzierung der Kappe (T) auf dem Förderer (11) darstellt, wenn die Kappe (T) an der Inspektionsposition platziert ist;
- durch die Steuereinheit, Empfangen des Kontrollbildes und Vergleichen des Kontrollbildes mit Referenzinformationen, die eine vorbestimmte Position darstellen, an der die Kappe (T) mit der Inspektionsachse (I) fluchtet;
- durch die Steuereinheit, Verarbeiten und Erzeugen der Informationen bezüglich des Schlitzes auf der Grundlage des Vergleichs.

15. Verfahren zur Herstellung von Kunststoffkappen (T) in einem kontinuierlichen Zyklus, umfassend die folgenden Schritte:
- Formen der Kappen durch eine Formmaschine;
- Inspizieren eines Schlitzes, der an einer seitlichen Oberfläche (SL) der Kunststoffkappe (T) ausgebildet ist, durch ein Verfahren nach einem der vorhergehenden Ansprüche 11 bis 14.

## Revendications

1. Appareil (1) d'inspection d'une fente réalisée sur une surface latérale (SL) d'un capuchon en plastique (T), comprenant:
- un convoyeur (11), configuré pour transporter le capuchon (T) le long d'un trajet (P);
- un dispositif d'éclairage (10), configuré pour éclairer la surface latérale (SL) du capuchon (T) placé dans une position d'inspection, dans lequel le capuchon (T), dans la position d'inspection, est aligné sur un axe d'inspection (I), l'axe d'inspection (I) étant orienté verticalement et transversalement au trajet (P);
- une pluralité de caméras (12) entourant l'axe d'inspection (I) et configurées pour capturer des données d'image représentant une pluralité d'images de la surface latérale (SL) du capuchon (T) dans la position d'inspection;
- une unité de contrôle, configurée pour recevoir et traiter les données d'image pour dériver des informations relatives à la fente,
**caractérisé en ce que** le dispositif d'éclairage (10) inclut une paroi latérale (101) s'étendant autour de l'axe d'inspection (I) pour éclairer toute la surface latérale (SL) du capuchon (T) avec des rayons qui convergent vers l'axe d'inspection (I), la paroi latérale (101) délimitant un espace interne et incluant une ouverture d'entrée (103) et une ouverture de sortie (104) pour permettre le passage du capuchon dans et hors de l'espace interne, respectivement.

2. Appareil (1) selon la revendication 1, comprenant un collimateur (113), interposé entre le dispositif d'éclairage (10) et l'axe d'inspection (I) et configuré pour collimater la lumière émise par le dispositif d'éclairage (10) vers l'axe d'inspection (I).

3. Appareil (1) selon la revendication 2, dans lequel le collimateur (113) comprend une grille de collimation, s'étendant autour de l'axe d'inspection (I) le long de la paroi latérale (101) du dispositif d'éclairage (10) pour décrire une forme cylindrique autour de l'axe d'inspection (I) de sorte que les rayons sont dirigés radialement, perpendiculairement à l'axe d'inspection (I).

4. Appareil (1) selon l'une quelconque des revendications précédentes, dans lequel la paroi latérale (101) du dispositif d'éclairage (10) inclut un corps diffuseur (110), ayant une configuration en forme d'anneau et dans lequel le dispositif d'éclairage (10) comprend:
- une source de lumière primaire (111) disposée le long d'un bord supérieur (110b) du corps diffuseur (110), le corps diffuseur (110) étant configuré pour diffuser la lumière provenant de la source de lumière primaire (111) dans l'espace interne, et
- une couche réfléchissante (112), appliquée sur une surface externe (110e) du corps diffuseur (110), tournée vers l'espace interne pour réfléchir les rayons dirigés à l'opposé de l'axe d'inspection (I).

5. Appareil (1) selon l'une quelconque des revendications précédentes, comprenant une paroi supérieure (102), couplée à la paroi latérale (101) du dispositif d'éclairage (10) pour délimiter le sommet de l'espace interne, et une source de lumière supplémentaire (111), couplée à la paroi supérieure (102) pour émettre de la lumière dans l'espace interne par le haut.

6. Appareil (1) selon l'une quelconque des revendications précédentes, dans lequel au moins l'une des conditions suivantes est vraie:
i) chacune de la pluralité d'images représente une portion respective de la surface latérale (SL), imagée par une caméra correspondante (12) de la pluralité de caméras (12), et l'unité de contrôle est programmée pour dériver une image développée de chacune de la pluralité d'images, dans lequel l'image développée montre la surface latérale (SL) du capuchon (T) représentée dans un plan;
ii) la paroi latérale (101) comprend une pluralité d'ouvertures (114), chaque caméra (12) étant située au niveau d'une ouverture (114) de la pluralité d'ouvertures (114);
iii) chaque caméra (12) définit un axe de capture (R), l'axe de capture (R) de chaque caméra (12) étant incliné par rapport à un plan qui est perpendiculaire à l'axe d'inspection (I).

7. Appareil (1) selon l'une quelconque des revendications précédentes, comprenant un élément de masquage (13), dans lequel l'élément de masquage (13)
est situé à l'intérieur de l'espace interne et s'étend dans un plan (E) transversal à l'axe d'inspection (I),
est aligné sur l'axe d'inspection (I), de sorte que le capuchon (T) placé dans la position d'inspection est interposé verticalement entre le convoyeur (11) et l'élément de masquage (13),
est mobile verticalement par rapport au convoyeur (11), pour permettre de régler une distance entre l'élément de masquage (13) et le capuchon (T) placé dans la position d'inspection.

8. Appareil (1) selon l'une quelconque des revendications précédentes, comprenant une caméra supérieure (15), située au-dessus du convoyeur (11) et définissant un axe de capture (R') orienté le long de l'axe d'inspection (I) pour visualiser le capuchon (T) dans la position d'inspection depuis le haut, dans lequel la caméra supérieure (15) est configurée pour capturer une image de contrôle représentant un placement du capuchon (T) sur le convoyeur (11) et dans lequel l'unité de contrôle est connectée à la caméra supérieure (15) pour recevoir l'image de contrôle et est programmée pour:
- comparer l'image de contrôle avec des informations de référence représentant une position prédéterminée où le capuchon (T) est aligné sur l'axe d'inspection (I);
- traiter les données d'image pour dériver les informations relatives à la fente sur la base de la comparaison.

9. Appareil (1) selon l'une quelconque des revendications précédentes, comprenant un capteur de position configuré pour capturer un signal de position représentant un placement du capuchon (T) dans une position prédéterminée en amont de la zone d'inspection, dans lequel l'unité de contrôle reçoit le signal de position et ordonne aux caméras (12) de capturer les données d'image d'une manière synchronisée sur la base du signal de position.

10. Ligne de fabrication de capuchons en plastique (T), comprenant:
- une machine de formage, pour la fabrication des capuchons en plastique en cycle continu;
- un appareil (1) d'inspection d'une fente réalisée sur une surface latérale (SL) du capuchon en plastique (T), l'appareil étant selon l'une quelconque des revendications précédentes.

11. Procédé d'inspection d'une fente réalisée sur une surface latérale (SL) d'un capuchon en plastique (T), le procédé comprenant les étapes suivantes:
- par l'intermédiaire d'un convoyeur (11), transporter le capuchon en plastique (T) le long d'un trajet (P);
- par l'intermédiaire d'un dispositif d'éclairage (10), éclairer la surface latérale (SL) du capuchon (T) lorsque le capuchon (T) est placé dans une position d'inspection où il est aligné sur un axe d'inspection (I), l'axe d'inspection (I) étant orienté verticalement et transversalement au trajet (P);
- capturer des données d'image, au moyen d'une pluralité de caméras (12) entourant l'axe d'inspection (I), lorsque le capuchon (T) est dans la position d'inspection, les données d'image représentant une pluralité d'images de la surface latérale (SL) du capuchon (T);
- par l'intermédiaire d'une unité de contrôle, recevoir et traiter les données d'image pour dériver des informations relatives à la fente,
le procédé étant **caractérisé en ce que** le dispositif d'éclairage (10) inclut une paroi latérale (101) s'étendant autour de l'axe d'inspection (I) pour éclairer toute la surface latérale (SL) du capuchon (T) simultanément avec des rayons qui convergent vers l'axe d'inspection (I), la paroi latérale (101) délimitant un espace interne et incluant une ouverture d'entrée (103) et une ouverture de sortie (104) pour permettre le passage du capuchon (T) dans et hors de l'espace interne, respectivement.

12. Procédé selon la revendication 11, comprenant une étape, effectuée par une grille de collimation d'un collimateur (113), de collimater la lumière émise par le dispositif d'éclairage (10) vers l'axe d'inspection (I), dans lequel la grille de collimation est interposée entre le dispositif d'éclairage (10) et l'axe d'inspection (I), pour collimater la lumière émise par le dispositif d'éclairage (10) vers l'axe d'inspection (I), et s'étend autour de l'axe d'inspection (I) le long de la paroi latérale (101) du dispositif d'éclairage (10) pour décrire une forme cylindrique autour de l'axe d'inspection (I) de sorte que les rayons sont dirigés radialement, perpendiculairement à l'axe d'inspection (I), et dans lequel la paroi latérale (101) du dispositif d'éclairage (10) inclut un corps diffuseur (110), ayant une configuration en forme d'anneau et dans lequel le dispositif d'éclairage (10) comprend une source de lumière primaire (111) disposée le long d'un bord supérieur (110b) du corps diffuseur (110), le procédé comprenant les étapes suivantes:
- par l'intermédiaire d'une source de lumière primaire (111), émettre de la lumière;
- par l'intermédiaire du corps diffuseur (110), diffuser la lumière provenant de la source de lumière primaire (111) dans l'espace interne.

13. Procédé selon la revendication 11 à 12, dans lequel chaque caméra (12) définit un axe de capture (R), l'axe de capture (R) étant incliné par rapport à un plan qui est perpendiculaire à l'axe d'inspection (I).

14. Procédé selon l'une quelconque des revendications 11 à 13, comprenant les étapes suivantes:
- par l'intermédiaire d'une caméra supérieure (15) située au-dessus du convoyeur (11) et définissant un axe de capture (R') aligné sur l'axe d'inspection (I), capturer une image de contrôle représentant un placement du capuchon (T) sur le convoyeur (11) lorsque le capuchon (T) est placé dans la position d'inspection;
- par l'intermédiaire de l'unité de contrôle, recevoir l'image de contrôle et comparer l'image de contrôle avec des informations de référence représentant une position prédéterminée où le capuchon (T) est aligné sur l'axe d'inspection (I);
- par l'intermédiaire de l'unité de contrôle, traiter et générer les informations relatives à la fente, sur la base de la comparaison.

15. Procédé de production de capuchons en plastique (T) en cycle continu, comprenant les étapes suivantes:
- mouler les capuchons par l'intermédiaire d'une machine de formage;
- inspecter une fente réalisée sur une surface latérale (SL) du capuchon en plastique (T), par l'intermédiaire d'un procédé selon l'une quelconque des revendications précédentes de 11 à 14.
